# DEMANDE DE BREVET EUROPEEN

(11) **EP 2 518 976 A1**
(43) Date de publication de la demande: **31.10.2012**
(21) Numéro de dépôt: 12305476.9
(22) Date de dépôt: 27.04.2012
(51) Int. Cl.: H04L 29/06, G06Q 20/00

(54) **Système et procédé de paiement de proximité entre comptes bancaires**

(30) Priorité: 29.04.2011 FR 1153681
(71) Demandeur: Crédit Mutuel Arkea, 29480 Le Relecq Kerhuon (FR)
(72) Inventeur: Housset, Thierry, 29850 GOUESNOU (FR); Lemenicier, Henri, 29480 LE RELECQ KERHUON (FR)
(74) Mandataire: Casalonga, Axel

(57) **Abrégé**

Ce système de paiement entre un compte bancaire (8) d'un client et un compte bancaire (9) d'un commerçant comprend un terminal de paiement électronique (3a) disposé chez le commerçant et comprenant un moyen d'identification du commerçant (3b), et une application logicielle apte à être exécutée sur un dispositif mobile communicant (2) du client, le terminal de paiement électronique communicant avec un circuit monétique (4) qui communique lui-même avec un centre serveur (7) de compte bancaire pour valider un achat et provoquer le transfert d'une somme d'argent du compte bancaire du client vers le compte bancaire du commerçant, par le centre serveur (7) de compte bancaire.

## Description

L'invention a pour domaine technique les transactions bancaires et en particulier les transactions bancaires de proximité entre porte-monnaie électroniques.

Plus particulièrement, l'invention concerne les transactions bancaires à partir de terminaux électroniques portables sans fil. Par exemple, par terminaux électroniques portables on entend, dans le cadre de la présente description, tout type de dispositif mobile communicant, notamment de type téléphone mobile ou tablette tactile capable d'entrer en communication avec un serveur distant en utilisant un réseau de télécommunication sans fil. Un tel réseau de télécommunication peut correspondre, notamment, mais non exclusivement, soit à un réseau cellulaire de téléphonie, soit un réseau informatique, de type Wi-fi.

Les paiements mettant en oeuvre des téléphones mobiles représentent un sujet qui cristallise l'attention d'un nombre croissant d'acteurs originaires d'horizons très variés. Les solutions proposées sont basées sur la technologie RFID (acronyme de « Radio Frequency Identification Device » en langue anglaise) ou sur la technologie NFC (acronyme de « Near Field Communication » en langue anglaise).

Cependant, toutes ces technologies nécessitent le déploiement d'une infrastructure lourde permettant de gérer les paiements. Elles nécessitent en particulier l'emploi de terminaux de paiement dédiés. Par ailleurs, toutes ces technologies ne présentent pas le même rapport entre la richesse des services proposés et la simplicité de mise en oeuvre.

Par ailleurs, dans le but de limiter l'emploi de pièces de monnaie et de billets de banque, dont la gestion est coûteuse tant pour les commerçants que pour les établissements financiers, des porte-monnaie électroniques ont été développés, qui permettent de stocker une somme d'argent et d'effectuer des paiements sur des terminaux de paiement dédiés.

Le stockage de la somme d'argent au crédit du porte-monnaie peut s'effectuer soit dans une puce intégrée à une carte, soit dans des dispositifs électroniques, soit à distance sur des comptes mémorisés dans des serveurs.

Certains services de paiement proposent ainsi d'effectuer des paiements en ligne, via Internet, ou de recevoir des paiements, sans mettre en oeuvre le compte bancaire d'un utilisateur.

Au vu de ce qui précède, il existe un besoin pour disposer d'un service de paiement combinant une grande richesse de services proposés avec une grande simplicité de mise en oeuvre.

Il existe en particulier un besoin pour disposer d'un moyen de paiement, mettant en oeuvre un terminal de télécommunication portable sans fil ne nécessitant pas de modification des réseaux monétiques existants.

L'invention a donc pour but de proposer un système et un procédé de paiement utilisant le réseau interbancaire existant.

Un autre but de l'invention est de proposer un système et un procédé de paiement permettant à un utilisateur porteur d'un terminal de télécommunication portable sans fil de valider une transaction initiée par un commerçant afin de provoquer la transmission d'un flux financier de paiement de son porte-monnaie électronique vers le porte-monnaie électronique du commerçant, et ce, en utilisant le réseau interbancaire existant.

L'invention a donc pour objet, selon un premier aspect, un système de paiement entre un compte bancaire d'un client et un compte bancaire d'un commerçant, comprenant un terminal de paiement électronique disposé chez le commerçant et comprenant un moyen d'identification du commerçant, et une application logicielle apte à être exécutée sur un dispositif mobile communicant du client, le terminal de paiement électronique communicant avec un circuit monétique (4) qui communique lui-même avec un centre serveur de compte bancaire pour valider un achat et provoquer le transfert d'une somme d'argent du compte bancaire du client vers le compte bancaire du commerçant, par le centre serveur de compte bancaire.

Le compte bancaire peut être un porte-monnaie électronique.

Les coordonnées bancaires identifiant le compte bancaire du client peuvent être mémorisées dans un portefeuille électronique de l'application logicielle.

Le dispositif mobile communicant peut être apte à scanner des codes barres d'articles objets du paiement, l'application logicielle étant apte à générer le montant total des articles objets du paiement.

L'application logicielle peut être apte à identifier le commerçant.

L'application logicielle peut être apte à identifier le commerçant par une localisation du dispositif mobile communicant.

Le dispositif mobile communicant peut être un téléphone intelligent.

Un autre objet de l'invention est un procédé de paiement entre un compte bancaire d'un client et un compte bancaire d'un commerçant, comprenant un terminal de paiement électronique disposé chez le commerçant et comprenant un moyen d'identification du commerçant, et une application logicielle apte à être exécutée sur un dispositif mobile communicant du client, le terminal de paiement électronique communicant avec un circuit monétique qui communique lui-même avec un centre serveur de comptes bancaires pour valider un achat et provoquer le transfert d'une somme d'argent du compte bancaire du client vers le compte bancaire du commerçant, par le centre serveur de compte bancaire, dans lequel :
- on émet, à partir du terminal de paiement électronique du commerçant, une requête de transfert d'une somme d'argent du compte bancaire du client vers le compte bancaire du commerçant, à travers le circuit monétique à destination du compte bancaire du commerçant,
- on émet, à partir du dispositif mobile communicant, une autre requête de paiement d'une somme d'argent du compte bancaire du client vers le compte bancaire du commerçant,
- on synchronise la requête de transfert avec l'autre requête de transfert,
- on effectue le transfert de la somme d'argent du compte bancaire du client vers le compte bancaire du commerçant, et
- on émet une confirmation de paiement à destination du programme et à destination du terminal de paiement électronique.

Le compte bancaire peut être un porte-monnaie électronique.

Les coordonnées bancaires identifiant le compte bancaire du client peuvent être mémorisées dans un portefeuille électronique de l'application logicielle, le dispositif mobile communicant procédant à l'émission de l'autre requête de paiement en fonction des données reçues du portefeuille électronique.

On peut générer la requête de transfert d'une somme d'argent du compte bancaire du client vers le compte bancaire du commerçant en saisissant la somme à payer sur le terminal de paiement électronique et en identifiant le commerçant sur ledit terminal.

On peut générer l'autre requête de paiement d'une somme d'argent du compte bancaire du client vers le compte bancaire du commerçant en identifiant le commerçant dans le programme exécuté sur le dispositif mobile communicant.

On peut générer l'autre requête de transfert d'une somme d'argent du compte bancaire du client vers le compte bancaire du commerçant en identifiant le commerçant, en scannant des codes barres d'articles objets du paiement, et en générant le montant total des articles objets du paiement.

On peut identifier le commerçant par géolocalisation.

On peut identifier le commerçant par lecture d'un code barre.

On peut identifier le commerçant par choix manuel dans une liste.

D'autres buts, caractéristiques et avantages apparaîtront à la lecture de la description suivante donnée uniquement en tant qu'exemple non limitatif et faite en référence aux dessins annexés sur lesquels :
- la figure 1 est un organigramme d'un système de paiement selon l'invention mis en oeuvre entre un client et un commerçant ;
- la figure 2 illustre l'architecture générale d'un système de paiement selon l'invention ;
- la figure 3 montre les principales phases du procédé de paiement selon l'invention ;
- la figure 4 est un exemple de mise en oeuvre du système des figures 1 et 2 ; et
- la figure 5 est un autre exemple de mise en oeuvre du système des figures 1 et 2.

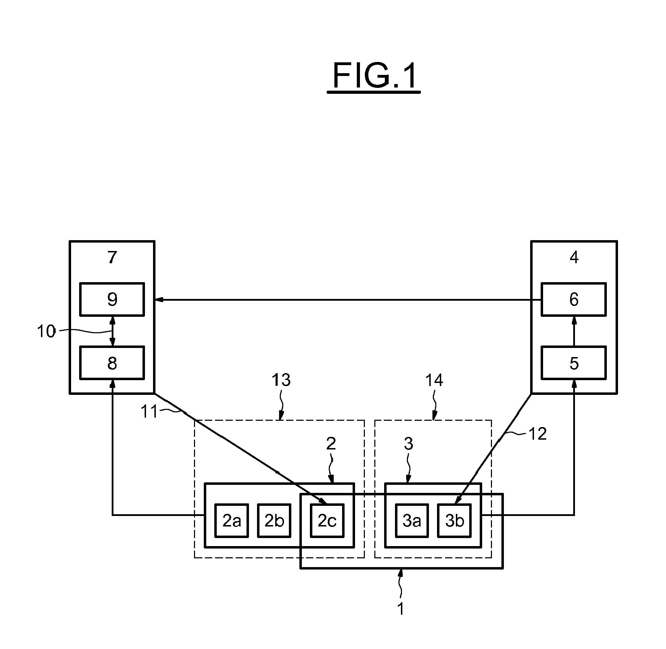

En se référant tout d'abord à la figure 1, on va décrire le principe général d'un système de paiement selon l'invention dans le cas où le paiement est réalisé au moyen d'un porte-monnaie électronique.

Ce système de paiement 1 est ici destiné au paiement d'une transaction entre un commerçant 14 et un client 13 par transfert d'un flux financier du porte-monnaie électronique du client vers le porte-monnaie électronique du commerçant.

Ce système de paiement comprend essentiellement un ensemble de paiement comprenant un terminal de paiement électronique 3a mis à disposition du commerçant 14, un programme 2c de paiement embarqué dans d'un dispositif mobile communicant, ici un téléphone portable intelligent 2 du client 13, un centre serveur 7 dans lequel sont hébergés les porte-monnaie électroniques et un centre serveur monétique 4. Pour la mise en oeuvre d'une transaction au moyen du système de paiement selon l'invention, le client 13 est situé à proximité du terminal de paiement 3a.

Par téléphone intelligent 2, on entend un dispositif électronique comprenant des fonctions de localisation 2a et des fonctions de communication sans fil 2b aptes à transmettre des données vers un réseau distant, notamment un réseau connecté à l'Internet. Le téléphone intelligent 2 dispose également de capacités d'exécution du programme 2c distinct des fonctions de localisation 2a et des fonctions de communication sans fil 2b. Le programme 2c est de préférence constitué par une application qui peut être librement téléchargé par exemple à partir du réseau Internet pour afficher sur l'écran du téléphone portable des fenêtres permettant l'affichage d'informations et la saisie de données pour valider un paiement.

Le système de paiement 1 met également en oeuvre une carte 3b apte à coopérer avec le terminal de paiement électronique 3a pour identifier le commerçant.

La carte 3b peut être une carte à piste magnétique ou une carte à puce. Elle pourrait également être remplacée, en variante, par un dispositif électronique ou un logiciel, aptes à transmettre un code d'identification identifiant le commerçant. Elle pourrait également être remplacée par la saisie d'un code d'identification ou la sélection d'une touche dédiée directement sur le terminal de paiement électronique 3a.

En fonctionnement, le téléphone intelligent 2 exécute le programme 2c qui interagit avec les fonctions de localisation 2a de manière à délivrer au centre serveur monétique la position du téléphone 2 et à émettre des données à destination du centre serveur 7 de gestion des porte-monnaie électroniques 7. Le centre serveur de porte-monnaie électroniques 7 est un serveur connu de l'homme du métier de la monétique, qui gère plusieurs comptes définis comme des porte-monnaie électroniques et destinés à payer des achats plus courants que ceux payés par carte bancaire.

Le serveur de porte-monnaie électroniques 7 comprend ici deux porte-monnaie électroniques, un premier porte-monnaie électronique 8 du client 13 et un deuxième porte-monnaie électronique 9 du commerçant 14.

Le terminal de paiement électronique 3a est connecté à un centre serveur monétique traditionnel 4 comprenant un réseau interbancaire 5 connecté à un serveur d'autorisation 6. Le serveur d'autorisation 6 est connecté au centre serveur de porte-monnaie.

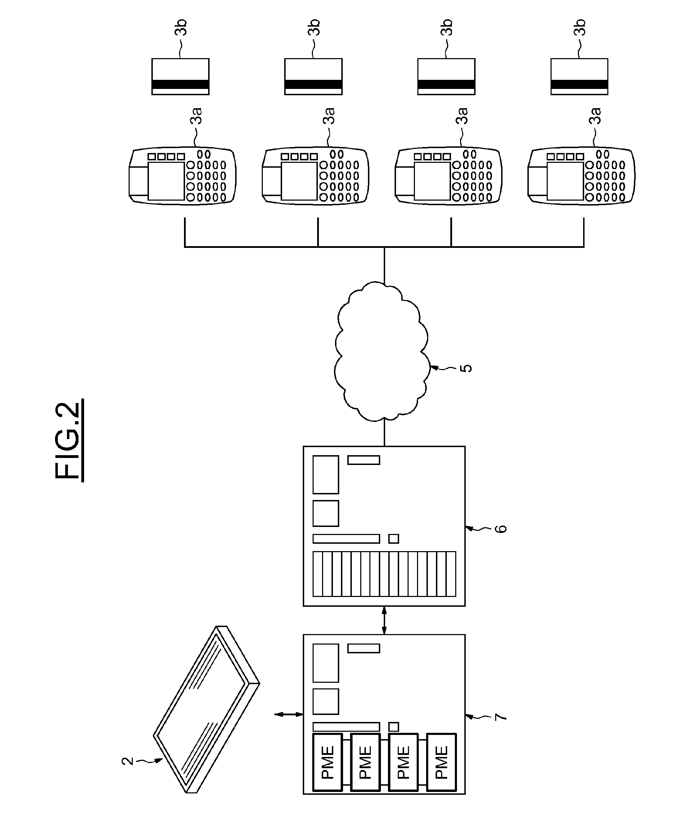

En se référant à la figure 2 sur laquelle on reconnaît le centre serveur 7 de porte-monnaie PME et le centre serveur monétique comprenant le serveur d'autorisation 6 et le réseau interbancaire 5, le système de paiement met en réalité en oeuvre un réseau de terminaux de paiement installés chez des commerçants proposant un service de paiement par porte-monnaie électronique et au moyen d'un téléphone portable 2 d'un ensemble d'abonnés.

Bien entendu, le centre serveur 7 gère l'ensemble des porte-monnaie PME des utilisateurs.

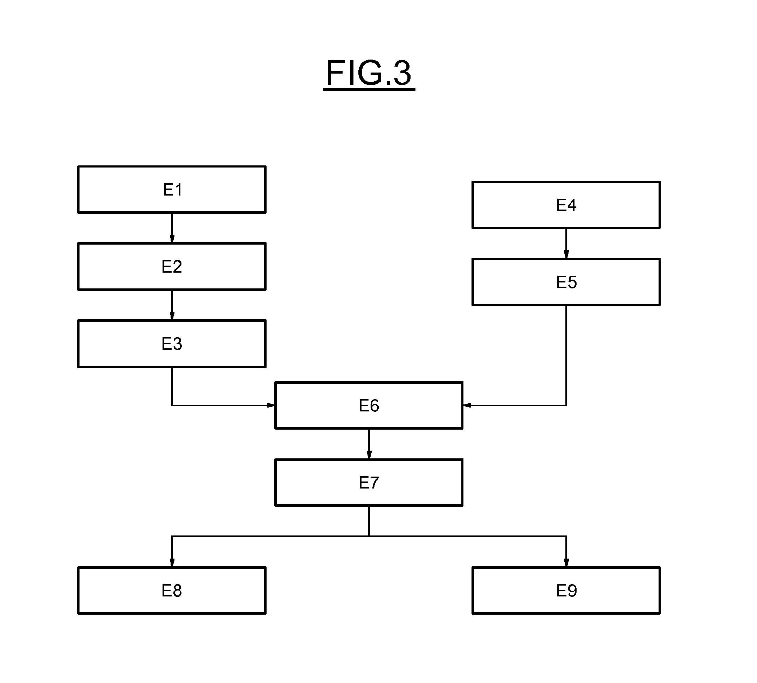

Le procédé de fonctionnement associé au système de paiement 1 comprend les étapes suivantes (figure 3).

En premier lieu, lorsqu'un qu'un usager souhaite régler un achat au moyen de son porte-monnaie électronique, par l'intermédiaire de son téléphone portable, le commerçant 14 saisit un montant à régler sur le terminal de paiement électronique 3a puis y introduit la carte 3b (étape E1).

La carte 3b portant l'identification du porte-monnaie électronique du commerçant est lue par le terminal de paiement électronique 3a qui envoie les informations lues à partir de la carte à destination du serveur d'autorisation 6 par l'intermédiaire du réseau interbancaire 5 auquel est relié le terminal de paiement électronique 3a.

Après identification du commerçant (étape E2), lors de l'étape E3 suivante, le serveur d'autorisation 6 entre en relation avec le centre serveur de porte-monnaie électroniques 7 comprenant le porte-monnaie électronique 9 du commerçant. La demande de paiement du commerçant est alors mise en attente de réception de la demande de paiement du client.

Parallèlement, le client reçoit sur son téléphone portable un message l'invitant à payer ses achats par l'intermédiaire du service de paiement par porte-monnaie électronique. Comme indiqué précédemment, l'émission d'un tel message est provoquée par l'application logicielle stockée dans le téléphone 2 (étape E4). Il est en outre procédé, au cours de cette étape, à la localisation du téléphone. Cette localisation peut être effectuée par l'application logicielle qui sollicite les fonctions de localisation 2a du téléphone, par exemple par triangulation GSM, par localisation GPS, par identification par étiquette RFID (« tag RFID », en langue anglaise). Cette localisation peut également être mise en oeuvre par lecture d'un code barre, par sélection manuelle ou par tout autre méthode de localisation.

Les informations de localisation sont alors transmises vers le centre serveur monétique 4. La localisation est alors comparée à un annuaire stocké dans le serveur d'autorisation 6 afin de déterminer le commerçant dans la boutique duquel le client se trouve.

Le programme communique ensuite la demande de paiement associée à l'identification du commerçant au serveur de porte-monnaie électroniques 7 comprenant le porte-monnaie électronique 8 du client (étape E5).

La demande de paiement du client et la demande de paiement du commerçant sont comparées, mises en rapport et synchronisées (étape E6). L'exemple ci-dessus montre l'émission de la demande de paiement du commerçant puis la demande de paiement du client. Ces requêtes peuvent être émises dans un ordre différent. En effet, la synchronisation des requêtes permet de ne pas tenir compte de leur ordre d'arrivée mais simplement de leur correspondance. Lors de l'étape E7 suivante, le centre serveur de porte-monnaie électroniques 7 déclenche alors un transfert de fonds du porte-monnaie électronique 8 du client vers le porte-monnaie électronique 9 du commerçant.

Une confirmation est envoyée à destination du client, par l'intermédiaire du réseau de télécommunication, en l'espèce le réseau Internet mobile, et du commerçant, par l'intermédiaire du réseau interbancaire 5 (étapes E8 et E9). Les confirmations de paiement du client et du commerçant utilisent dans le sens inverse, la succession des étapes employées respectivement par les demandes de paiement du client et du commerçant.

La confirmation de paiement du client est affichée sur le téléphone intelligent 2 par l'intermédiaire de l'application 2c, tandis que la confirmation de paiement du commerçant est affichée sur le terminal de paiement électronique 3a. Eventuellement, le terminal de paiement électronique 3a édite un ticket de paiement, ou tout autre moyen de preuve du paiement.

On notera que le mode de mise en oeuvre du procédé qui vient d'être décrit implique de la part du commerçant et du client un nombre limité d'opérations.

Le mode de fonctionnement décrit ci-dessus en référence des figures 1 à 3 peut également être appliqué à des comptes bancaires autres qu'un porte-monnaie électronique, aussi bien en ce qui concerne le compte du client que le compte du commerçant.

Indifféremment du mode de fonctionnement considéré, le client peut faire appel à un portefeuille électronique comprenant les coordonnées bancaires de toute ou partie de ses comptes et cartes bancaires. Un tel portefeuille électronique permet ainsi de sélectionner rapidement le compte ou la carte bancaire à débiter, sans nécessiter de saisir à nouveau l'intégralité des codes bancaires (par exemple, code IBAN, code BIC) ou des numéros de carte bancaire (par exemple, numéro de carte, date d'expiration, code de sécurité) l'identifiant. L'emploi d'un tel portefeuille électronique permet ainsi d'accélérer la transaction en simplifiant la saisie des données permettant de générer la requête de paiement. Le portefeuille électronique permet également de sécuriser l'identité bancaire du client en évitant qu'une tierce personne ne voie la saisie des codes bancaires. Les avantages décrits ci-dessus s'appliquent également au commerçant utilisant un portefeuille électronique pour désigner le compte bancaire recevant le paiement.

Pour choisir un compte ou une carte bancaire, l'utilisateur peut choisir la représentation symbolique correspondant, et entrer un identifiant court, tel qu'un mot de passe éventuellement associé à une adresse de courrier électronique. Alternativement, l'identifiant court peut être remplacé par tout système ou méthode d'identification permettant de confirmer de manière rapide et minimisant les interventions de l'utilisateur, par exemple l'identification biométrique ou visuelle.

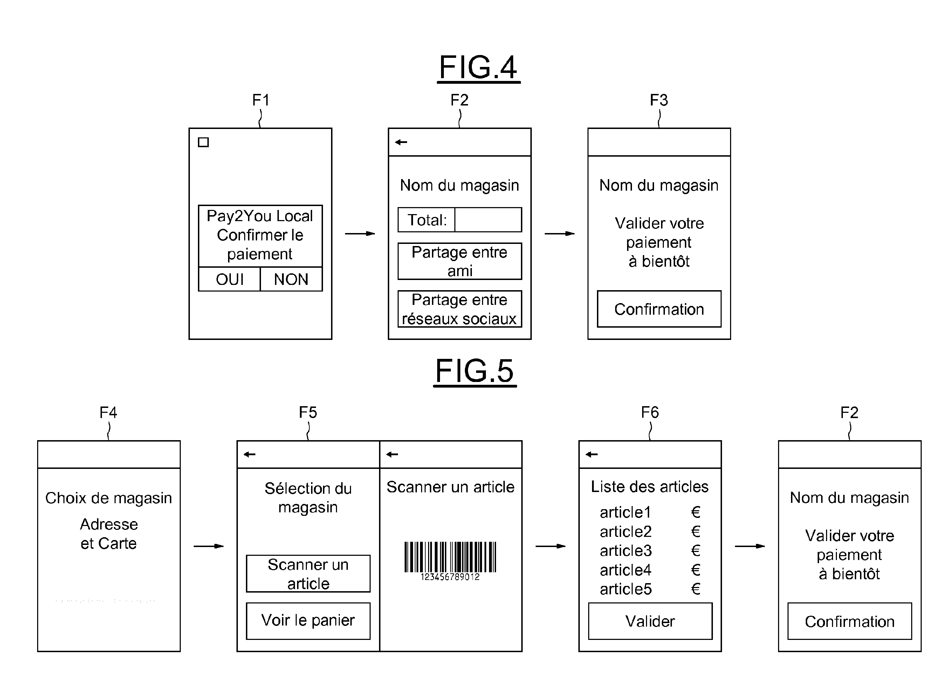

On se réfère maintenant à la figure 4, qui montre la succession de fenêtres qui s'affichent sur l'écran du téléphone, lors d'un paiement de porte-monnaie électronique à porte-monnaie électronique. Une première fenêtre F1 est tout d'abord présentée sur l'écran du téléphone qui a été considéré, après l'étape de géo-localisation comme étant le plus proche du terminal de paiement du commerçant, pour l'inviter à payer ses achats en utilisant son porte-monnaie électronique. Alternativement, le portefeuille électronique du client peut être employé pour désigner le compte bancaire à débiter. Le compte bancaire peut notamment être un porte-monnaie électronique.

Après accord, l'usager saisit un code d'identification pour confirmer le paiement (fenêtre F2). Un message de confirmation lui est alors adressé (fenêtre F3).

On notera enfin, en se référant à la figure 5, que l'invention n'est pas limitée au mode de réalisation décrit.

En effet, dans le mode de réalisation décrit précédemment, la saisie du prix de l'article à payer est initiée par le commerçant.

Selon un autre mode de réalisation, après qu'un client ait choisi le commerçant auprès duquel il souhaite procéder à un achat à partir, par exemple d'une fenêtre de sélection F4 qui lui est proposée, une deuxième fenêtre F5 lui est proposée afin soit d'effectuer un paiement direct d'un article, selon la procédure décrite précédemment, soit de scanner les produits à acheter.

Cette procédure est bien entendu avantageuse dans le cas où un nombre relativement important de produits doivent être payés.

Après avoir scanné les articles au moyen de l'écran de son téléphone, une troisième fenêtre F6 est affichée pour consulter, contrôler la liste des produits et visualiser le montant total des articles objets du paiement calculé par l'application logicielle 2c. La fenêtre F2 décrite précédemment est alors affichée pour procéder au paiement selon la procédure décrite dans le premier mode de réalisation. La caisse centrale ou une caisse désignée procède alors à l'édition d'un justificatif de paiement après avoir reçu la confirmation de paiement.

## Revendications

1. Système de paiement entre un compte bancaire (8) d'un client et un compte bancaire (9) d'un commerçant, **caractérisé en ce qu'**il comprend un terminal de paiement électronique (3a) disposé chez le commerçant et comprenant un moyen d'identification du commerçant (3b), et une application logicielle apte à être exécutée sur un dispositif mobile communicant (2) du client, le terminal de paiement électronique communicant avec un circuit monétique (4) qui communique lui-même avec un centre serveur (7) de comptes bancaires pour valider un achat et provoquer le transfert d'une somme d'argent du compte bancaire du client vers le compte bancaire du commerçant, par le centre serveur (7) de compte bancaire.

2. Système selon la revendication 1, dans lequel le compte bancaire est un porte-monnaie électronique.

3. Système selon l'une quelconque des revendications 1 ou 2, dans lequel les coordonnées bancaires identifiant le compte bancaire du client sont mémorisées dans un portefeuille électronique de l'application logicielle.

4. Système selon l'une quelconque des revendications précédentes, dans lequel l'application logicielle est apte à identifier le commerçant.

5. Système selon la revendication 4, dans lequel l'application logicielle est apte à identifier le commerçant par une localisation du dispositif mobile communicant (2).

6. Système selon l'une quelconque des revendications précédentes, dans lequel le dispositif mobile communicant est un téléphone intelligent.

7. Procédé de paiement entre un compte bancaire (8) d'un client et un compte bancaire (9) d'un commerçant, comprenant un terminal de paiement électronique (3a) disposé chez le commerçant et comprenant un moyen d'identification du commerçant (3b), et une application logicielle apte à être exécutée sur un dispositif mobile communicant (2) du client, le terminal de paiement électronique communicant avec un circuit monétique (4) qui communique lui-même avec un centre serveur (7) de comptes bancaires pour valider un achat et provoquer le transfert d'une somme d'argent du compte bancaire du client vers le compte bancaire du commerçant, par le centre serveur (7) de compte bancaire, dans lequel
on émet, à partir du terminal de paiement électronique du commerçant, une requête de transfert d'une somme d'argent du compte bancaire du client vers le compte bancaire du commerçant, à travers le circuit monétique à destination du compte bancaire du commerçant,
on émet, à partir du dispositif mobile communicant, une autre requête de paiement d'une somme d'argent du compte bancaire du client vers le compte bancaire du commerçant,
on synchronise la requête de transfert avec l'autre requête de transfert,
on effectue le transfert de la somme d'argent du compte bancaire du client vers le compte bancaire du commerçant, et
on émet une confirmation de paiement à destination du programme et à destination du terminal de paiement électronique.

8. Procédé selon la revendication 7, dans lequel le compte bancaire est un porte-monnaie électronique.

9. Procédé selon l'une quelconque des revendications 7 ou 8, dans lequel les coordonnées bancaires identifiant le compte bancaire du client sont mémorisées dans un portefeuille électronique de l'application logicielle, le dispositif mobile communicant procédant à l'émission de l'autre requête de paiement en fonction des données reçues du portefeuille électronique.

10. Procédé selon l'une quelconque des revendications 7 à 9, dans lequel on génère la requête de transfert d'une somme d'argent du compte bancaire du client vers le compte bancaire du commerçant en saisissant la somme à payer sur le terminal de paiement électronique et en identifiant le commerçant sur ledit terminal.

11. Procédé selon l'une quelconque des revendications 7 à 10, dans lequel on génère l'autre requête de paiement d'une somme d'argent du compte bancaire du client vers le compte bancaire du commerçant en identifiant le commerçant dans le programme exécuté sur le dispositif mobile communicant.

12. Procédé selon l'une quelconque des revendications 7 à 9, dans lequel on génère l'autre requête de transfert d'une somme d'argent du compte bancaire du client vers le compte bancaire du commerçant en identifiant le commerçant, en scannant des codes barres d'articles objets du paiement, et en générant le montant total des articles objets du paiement.

13. Procédé selon l'une quelconque des revendications 11 ou 12, dans lequel on identifie le commerçant par géolocalisation.

14. Procédé selon l'une quelconque des revendications 11 ou 12, dans lequel on identifie le commerçant par lecture d'un code barre.

15. Procédé selon l'une quelconque des revendications 11 ou 12, dans lequel on identifie le commerçant par choix manuel dans une liste.
